# FASCICULE DE BREVET EUROPEEN

(11) **EP 3 652 753 B1**
(45) Date de publication et mention de la délivrance du brevet: **04.08.2021**
(21) Numéro de dépôt: 18737301.4
(22) Date de dépôt: 12.07.2018
(51) Int. Cl.: G21C 17/108, G21C 13/02, G21C 17/116

(54) **RÉACTEUR NUCLÉAIRE AVEC DES DÉTECTEURS NEUTRONIQUES IN-VESSEL EX-CORE, ET PROCÉDÉ DE PILOTAGE CORRESPONDANT**
KERNREAKTOR MIT NEUTRONENDETEKTOREN INNERHALB DES BEHÄLTERS UND AUSSERHALB DES KERNS UND ENTSPRECHENDES STEUERUNGSVERFAHREN
NUCLEAR REACTOR WITH IN-VESSEL EX-CORE NEUTRON DETECTORS AND CORRESPONDING CONTROL METHOD

(30) Priorité: 12.07.2017 FR 1756619
(43) Date de publication de la demande: 20.05.2020
(73) Titulaire: Société Technique pour l'Energie Atomique, 91190 Villiers Le Bacle (FR)
(72) Inventeur: BRUN, Michel, 13109 Simiane-Collongue (FR); SPYCKERELLE, Sandrine, 13100 Aix-En-Provence (FR)
(74) Mandataire: Lavoix
(86) Numéro de dépôt international: PCT/EP2018/068944
(87) Numéro de publication internationale: WO 2019/012044

(56) Documents cités:
- JP-A- H04 232 497
- JP-A- 2008 175 732
- VERMA V ET AL: "Neutron flux monitoring with in-vessel fission chambers to detect an inadvertent control rod withdrawal in a sodium-cooled fast reactor", ANNALS OF NUCLEAR ENERGY, PERGAMON PRESS, OXFORD, GB, vol. 94, 23 avril 2016 (2016-04-23), pages 487-493, XP029537567, ISSN: 0306-4549, DOI: 10.1016/J.ANUCENE.2016.04.019

## Description

L'invention concerne en général les systèmes de conduite et de protection de réacteurs nucléaires, usuellement désigné par le terme anglais Instrumentation & Control I&C.

Plus précisément, l'invention concerne selon un premier aspect un réacteur nucléaire équipé d'un tel système de conduite et de protection.

Les systèmes de conduite et de protection comportent typiquement un dispositif de mesure en continu du flux neutronique émis par le cœur. Ce dispositif mesure en permanence le flux neutronique, à la fois au démarrage du réacteur et lors de son fonctionnement normal, en puissance.

Le système de conduite et de protection assure la protection du réacteur, sur la base, entre autres, des informations fournies par le dispositif de mesure du flux neutronique. Le système doit réaliser des mesures en temps réel sur l'ensemble de la gamme de puissance du réacteur, du niveau source à la pleine puissance

Il est donc très important que celui-ci fournisse des mesures neutroniques avec une constante de temps courte, allant de quelques dizaines de secondes à la fraction de seconde, compatible avec la performance requise pour la fonction de protection.

Les détecteurs neutroniques du dispositif de mesure en continu du flux neutronique sont généralement disposés à l'extérieur de la cuve du réacteur. Le taux de comptage de ces détecteurs dépend :
- de la sensibilité du détecteur, qui est limitée pour les technologies disponibles à une valeur d'environ 0,1 à 40 cp/(n/cm².s) ;
- du flux résiduel à l'extérieur de la cuve, dépendant lui-même d'une part de l'activité résiduelle du cœur à l'arrêt et d'autre part de la géométrie du réacteur.

Le taux de comptage influe directement sur la constante de temps de réponse du système de conduite et de protection.

Sur les réacteurs nucléaires disposant d'un cœur de petite taille, comme par exemple les SMR (Small and Modular Reactor, ou Réacteur petit et modulaire), il arrive que les niveaux de comptage soient trop faibles pour garantir un temps de réponse suffisamment rapide vis-à-vis des accidents pouvant intervenir au démarrage du réacteur.

Une première possibilité est de réaliser des développements technologiques permettant d'améliorer la sensibilité des détecteurs neutroniques. Cette sensibilité peut être augmentée en associant en parallèle un plus grand nombre de cellules détectrices unitaires. Toutefois, cette solution bute sur des limites technologiques, notamment l'effet d'ombre entre les différentes cellules. En outre, elle conduit à une augmentation significative du coût des détecteurs.

Une autre solution serait de mettre en place un chemin de neutrons à faible atténuation. Une telle solution est décrite par exemple dans WO 2015/099855. Cette solution présente le défaut de créer localement une discontinuité dans la protection radiologique de la cuve et de l'installation.

Par ailleurs, les chaînes neutroniques dites « in-core », dont le rôle est de faire des cartographies périodiques du flux neutronique dans le cœur, ne peuvent pas être utilisées pour réaliser les mesures neutroniques nécessaires au système de conduite et de protection du réacteur nucléaire. Les chaînes dites in-core ne couvrent pas toute la gamme et/ou ne sont pas des mesures en temps réel. Par ailleurs, les détecteurs des chaînes in-core ne sont pas positionnés en permanence dans le cœur et doivent être retirés pour ne pas être trop rapidement usés par la fluence du cœur.

Les documents JP2008175732A et JPH04232497A divulguent des réacteurs nucléaires avec un détecteur neutronique disposé dans la lame d'eau primaire séparant le cœur de la cuve.

Dans ce contexte, l'invention vise à proposer un réacteur nucléaire dont le dispositif de mesure en continu du flux neutronique ne présente pas les défauts ci-dessus. A cette fin, l'invention porte sur un réacteur nucléaire comprenant :
- une cuve ayant un axe central ;
- un cœur disposé dans la cuve, le cœur comprenant une pluralité d'assemblages de combustibles nucléaires, une lame d'eau primaire séparant le cœur de la cuve radialement à partir de l'axe central et entourant le coeur ;
- un système de conduite et de protection du réacteur nucléaire configuré pour assurer la conduite et la protection du réacteur dans une gamme de puissance prédéterminée, typiquement entre une puissance résiduelle à l'arrêt et une puissance nominale, ledit système de conduite et de protection comprenant un dispositif de mesure en continu du flux neutronique émis par le coeur ;
caractérisé par le fait que le dispositif de mesure comprend au moins un détecteur neutronique mesurant en continu ledit flux neutronique, le ou les détecteur(s) neutronique(s) étant disposé(s) dans la lame d'eau primaire radialement entre le cœur et la cuve, le ou les détecteur(s) neutronique(s) étant placé(s) à une ou des position(s) radiale(s) choisie(s) pour obtenir, grâce à l'atténuation de la lame d'eau, un ou des taux de comptage adapté(s) pour le système de conduite de de protection du réacteur nucléaire pour toute la gamme de puissance prédéterminée.

Le fait de disposer le ou chaque détecteur neutronique dans la lame d'eau permet d'optimiser la réponse du détecteur pour l'ensemble de la gamme de mesure. Il est suffisamment proche du cœur pour, au démarrage du réacteur, avoir un taux de comptage suffisant, permettant en cas de situation anormale du réacteur un temps de réponse du système de conduite et de protection du réacteur adapté.

Quand le réacteur fonctionne à pleine puissance, d'une part la lame d'eau assure une atténuation suffisante du flux pour que le détecteur reste dans sa gamme de mesure et d'autre part la lame d'eau offre une protection suffisante, de telle sorte que la durée de vie du détecteur neutronique est satisfaisante.

Ces résultats sont obtenus sans avoir à créer une discontinuité dans la protection radiologique, puisque la lame d'eau située entre le cœur et l'environnement, dont la cuve, reste intègre.

Le réacteur peut en outre présenter une ou plusieurs des caractéristiques ci-dessous, considérées individuellement ou selon toutes les combinaisons techniquement possibles :
- le ou chaque détecteur nucléaire est directement plongé dans l'eau primaire, sans interposition d'un doigt de gant ;
- au moins un des détecteurs neutroniques est un détecteur fixe, disposé à une distance radiale fixe du coeur ;
- ladite distance radiale est choisie de telle sorte que :
   - quand le réacteur nucléaire est à l'arrêt, le flux neutronique au niveau du détecteur fixe correspond à un comptage compris entre 1 et 100 cp/s ;
   - quand le réacteur nucléaire fonctionne à pleine puissance, le flux neutronique au niveau du détecteur fixe correspond à une mesure restant dans une gamme de mesure en mode courant du détecteur fixe ;
- tous les détecteurs neutroniques sont fixes et sont disposés à ladite distance radiale du coeur ;
- tous les détecteurs neutroniques sont fixes, au moins deux des détecteurs neutroniques étant disposés à des distances radiales du cœur respectives différentes l'une de l'autre, adaptées pour des fourchettes de puissance différentes du réacteur nucléaire ;
- au moins un des détecteurs neutroniques est un détecteur mobile, mobile radialement par rapport au cœur dans la lame d'eau primaire ;
- le dispositif de mesure comprend un mécanisme de déplacement du détecteur mobile, configuré pour déplacer radialement le détecteur mobile au moins entre une position intérieure relativement plus proche du cœur et une position extérieure relativement plus éloignée du coeur ;
- la position intérieure est choisie de telle sorte que, quand le réacteur nucléaire est à l'arrêt, le flux neutronique au niveau du détecteur mobile corresponde à un comptage compris entre 1 et 100 cp/s ;
- la position extérieure est choisie de telle sorte que, quand le réacteur nucléaire fonctionne à pleine puissance, le flux neutronique au niveau du détecteur mobile corresponde à une mesure restant dans une gamme de mesure en mode courant du détecteur mobile ;
- le dispositif de mesure comprend au moins un détecteur fixe et au moins un détecteur mobile.

De préférence, le réacteur nucléaire comprend au moins un organe absorbeur de neutrons, et un dispositif de déplacement susceptible d'insérer le ou chaque organe absorbeur de neutrons dans le cœur, le système de conduite et de protection comprenant un contrôleur configuré pour piloter le dispositif de déplacement en utilisant des mesures effectuées par le ou chaque détecteur neutronique.

Selon un second aspect, l'invention porte sur un procédé de pilotage d'un réacteur nucléaire ayant les caractéristiques ci-dessus :
- quand le réacteur nucléaire est à l'arrêt ou fonctionne à une puissance inférieure à une première limite, mesurer le flux neutronique émis par le cœur avec le ou chaque détecteur mobile, placé en position intérieure ;
- quand le réacteur nucléaire fonctionne à une puissance supérieure à la première limite, mesurer le flux neutronique émis par le cœur avec le ou chaque détecteur fixe.

Par ailleurs, le procédé de pilotage peut être tel que le ou chaque détecteur mobile est déplacé à la position extérieure quand le réacteur nucléaire passe d'une puissance inférieure à une seconde limite à une puissance supérieure à la seconde limite.

D'autres caractéristiques et avantages de l'invention ressortiront de la description détaillée sur les données ci-dessous, à titre indicatif et nullement limitatif, en référence aux figures annexées, parmi lesquelles :
- la figure 1 est une représentation schématique simplifiée d'un réacteur nucléaire selon un premier mode de réalisation, considéré en section dans un plan perpendiculaire à l'axe central de la cuve ;
- la figure 2 est une représentation schématique simplifiée du réacteur nucléaire de la figure 1, prise en section dans un plan radial par rapport à l'axe central de la cuve ;
- la figure 3 est une représentation schématique d'un détecteur neutronique de la figure 1 ;
- la figure 4 est une vue similaire à celle de la figure 1, pour un réacteur nucléaire selon un second mode de réalisation de l'invention ;
- la figure 5 est une représentation schématique simplifiée du mécanisme de déplacement d'un des détecteurs mobiles de la figure 4 ; et
- la figure 6 est une vue similaire à celle de la figure 1, pour un réacteur nucléaire selon un troisième mode de réalisation de l'invention.

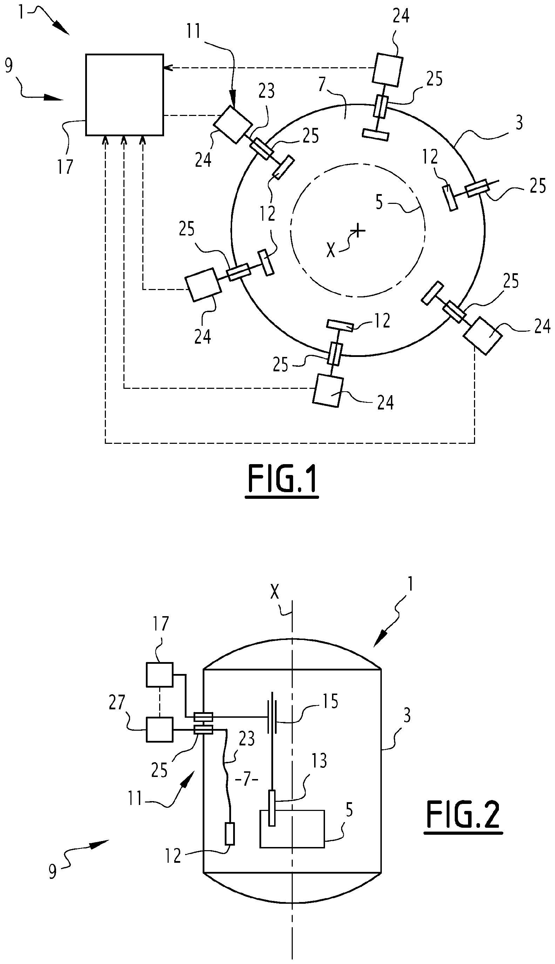

Le réacteur nucléaire 1 représenté sur la figure 1 est typiquement un réacteur à eau pressurisée (PWR en anglais) de type SMR (Small and Modular Reactor, Réacteur petit et modulaire). En variante, ce réacteur est d'un autre type, par exemple est un réacteur de forte puissance, ou au contraire un réacteur de petite puissance, ou encore un réacteur d'essai.

Le réacteur nucléaire 1 comprend une cuve 3 ayant un axe central X, et un cœur 5 disposé dans la cuve 3.

Le cœur 5 comprend une pluralité d'assemblages de combustible nucléaire.

La cuve 3 est remplie par le liquide primaire, qui est ici de l'eau, avec d'éventuels additifs. Le liquide primaire est désigné ici par le terme eau primaire.

La cuve 3 contient typiquement encore d'autres équipements. Elle contient les plaques inférieure et supérieure de cœur, des cloisonnements disposés autour des assemblages de combustible nucléaire et permettant notamment de canaliser la circulation de l'eau primaire à l'intérieur de la cuve, et encore d'autres internes qui ne seront pas énumérés ici.

Une lame d'eau primaire 7 sépare le cœur 5 de la cuve 3 radialement à partir de l'axe central X.

La lame d'eau primaire 7 entoure entièrement le cœur, c'est-à-dire s'étend sur toute la périphérie du cœur.

Elle présente radialement une épaisseur comprise entre 100 et 800 mm

Ainsi, le cœur 5 occupe le centre de la cuve, la lame d'eau primaire 7 ayant une forme annulaire et occupant la périphérie de la cuve 3.

Le réacteur nucléaire 1 comporte encore un système 9 de conduite et de protection du réacteur nucléaire. Il est configuré pour assurer la conduite et la protection du réacteur dans une gamme de puissance prédéterminée, typiquement entre une puissance résiduelle à l'arrêt et une puissance nominale du réacteur nucléaire.

Le système 9 comprend lui-même un dispositif 11 de mesure en continu du flux neutronique émis par le cœur 5.

Le dispositif 11 de mesure en continu du flux neutronique comprend une pluralité de détecteurs neutroniques 12, mesurant en continu ledit flux neutronique.

Le réacteur nucléaire 1 comporte encore au moins un organe absorbeur de neutrons 13 et un dispositif 15 de déplacement susceptible d'insérer le ou chaque organe absorbeur de neutrons 13 dans le cœur 5 (figure 2). Typiquement, le réacteur nucléaire comporte une pluralité d'organes absorbeurs de neutrons 13, appelé barre de contrôle ou grappe de contrôle, un seul de ces organes étant représenté sur la figure 2. Ces organes sont en un matériau absorbeur de neutrons. Ils sont déplacés typiquement verticalement par le dispositif 15, de manière à faire varier la réactivité du cœur.

Le système de conduite et de protection 9 comprend un contrôleur 17 configuré pour piloter le dispositif de déplacement 15 du ou de chaque organe absorbeur de neutrons, en utilisant les mesures effectuées par le dispositif de mesure neutronique 11.

Le contrôleur 17 est configuré, en fonctionnement normal du réacteur nucléaire, pour piloter le dispositif de déplacement 15 de manière à contrôler un ou plusieurs paramètres de fonctionnement du réacteur, tel(s) que la température moyenne dans le cœur ou l'axial offset.

Le contrôleur 17 est configuré pour, en situation anormale du réacteur, piloter le dispositif de déplacement 15 pour assurer la protection du réacteur. Typiquement, le contrôleur 17 provoque par exemple la chute d'au moins certains organes absorbeurs de neutrons 13, de manière à provoquer un arrêt d'urgence du réacteur nucléaire.

Le dispositif de mesure 11 doit donc fournir impérativement une mesure en continu du flux neutronique émis par le cœur 5, de manière à permettre au système de conduite et de protection d'exercer une surveillance permanente du cœur et d'intervenir à tout moment en cas de situation accidentelle.

Selon l'invention, le ou chaque détecteur neutronique 12 est disposé dans la lame d'eau 7 séparant le cœur 5 de la cuve 3, radialement entre le cœur 5 et la cuve 3, le ou les détecteur(s) neutronique(s) 12 étant placé(s) à une ou des position(s) radiale(s) choisie(s) pour obtenir, grâce à l'atténuation de la lame d'eau 7, un ou des taux de comptage adapté(s) pour le système de conduite de de protection du réacteur nucléaire 9 pour toute la gamme de puissance prédéterminée.

Le ou chaque détecteur neutronique 12 est donc disposé dans la cuve mais en dehors du cœur (in-vessel ex-core).

Le ou chaque détecteur neutronique 12 est directement plongé dans l'eau primaire, sans interposition d'un doigt de gant du type utilisé pour introduire les sondes in-core dans le cœur d'un réacteur nucléaire.

En d'autres termes, chaque détecteur neutronique 12 est placé en permanence dans la lame d'eau primaire 7, et n'est pas inséré à l'intérieur d'un conduit communiquant avec l'extérieur de la cuve, et permettant d'introduire et d'extraire le détecteur neutronique dans la cuve.

Le ou chaque détecteur neutronique 12 est d'un type adapté pour fonctionner de manière permanente à une température compatible avec les conditions régnant dans la cuve 3, c'est-à-dire avec une température de l'ordre de 300°C. Par exemple, le détecteur neutronique 12 comprend un organe de mesure 19 vendu par la société Photonis sous la référence CFUC07.

L'organe de mesure 19 est protégé de la pression par une enveloppe métallique 21. L'enveloppe métallique 21 entoure entièrement l'organe de mesure 19. Elle est dimensionnée pour résister à la pression régnant dans la cuve 3 du réacteur nucléaire. Elle est par exemple en acier inoxydable ou inconel.

Le ou chaque détecteur neutronique 12 est physiquement raccordé par un câble 23 à une chaîne de mesure 24 située hors de la cuve 3. Les signaux de mesure transitent par le câble 23.

Le dispositif de mesure 11 comporte encore des pénétrations électriques 25 par lesquelles les câbles 23 traversent la cuve 3. Les pénétrations électriques 25 sont avantageusement du type décrit dans la demande de brevet WO 2017/001409.

La chaîne de mesure 24 collecte les données fournies par le ou chaque détecteur neutronique 12. Elle est du type dit à grande dynamique, permettant une mesure sur environ 10 à 12 décades avec un même détecteur. Cette chaîne de mesure est avantageusement conforme à la norme IEC 61501 de novembre 1998.

La chaîne de mesure 24 est typiquement exploitée en mode comptage en bas de la gamme de mesure, et en mode courant en haut de la gamme de mesure. Quand elle est exploitée en mode comptage, la chaîne de mesure 24 mesure le nombre de coups par seconde enregistrés par le détecteur 12. Quand elle est exploitée en mode courant, la chaîne de mesure 24 mesure le courant électrique du signal transmis par le détecteur 12.

Selon un premier mode de réalisation, représenté sur la figure 1, le ou chaque détecteur neutronique 12 est un détecteur fixe, disposé à une distance radiale fixe du cœur 5.

Ce mode de réalisation est mis en œuvre typiquement quand le système de conduite et de protection 9 se satisfait d'une mesure sur 10 à 12 décades. Ceci est le cas notamment des cœurs 5 ayant une activité résiduelle à l'arrêt importante.

La distance radiale entre le ou chaque détecteur 12 et le cœur 5 est choisie de telle sorte que les deux conditions suivantes soient vérifiées.

Quand le réacteur nucléaire 1 est à l'arrêt, le flux neutronique au niveau du détecteur fixe 12 correspond à un comptage compris entre 1 et 100 cp/s, de préférence compris entre 5 et 50 cp/s.

Quand le réacteur nucléaire 1 fonctionne à pleine puissance, le flux neutronique au niveau du détecteur fixe 12 correspond à une mesure restant dans une gamme de mesure en mode courant du détecteur neutronique 12.

Dans le cas d'un détecteur neutronique avec un organe de mesure 19 de type CFUC07, la gamme de mesure en mode courant est d'environ 2mA en haut de gamme.

Avantageusement, le dispositif de mesure 11 comprend une pluralité de détecteurs neutroniques 12 répartis circonférentiellement autour du cœur 5, comme illustré sur la figure 1.

Tous les détecteurs neutroniques 12 sont fixes et sont disposés à la même distance radiale du cœur 5.

Le nombre de détecteur neutronique 12 dépend du niveau de redondance requis pour des raisons de sûreté et de disponibilité. Par exemple, le dispositif de mesure comporte cinq détecteurs 12, chacun associé à une chaîne de mesure 24 dédiée.

Chaque chaîne de mesure 24 fournit la valeur du flux neutronique mesurée par le détecteur neutronique 12 correspondant au contrôleur 17.

De préférence, le dispositif de mesure comporte un sixième détecteur neutronique 12, mis en service seulement en cas de défaillance l'un des cinq autres détecteurs neutroniques 12. Il est alors connecté à la chaîne de mesure 24 du détecteur défaillant.

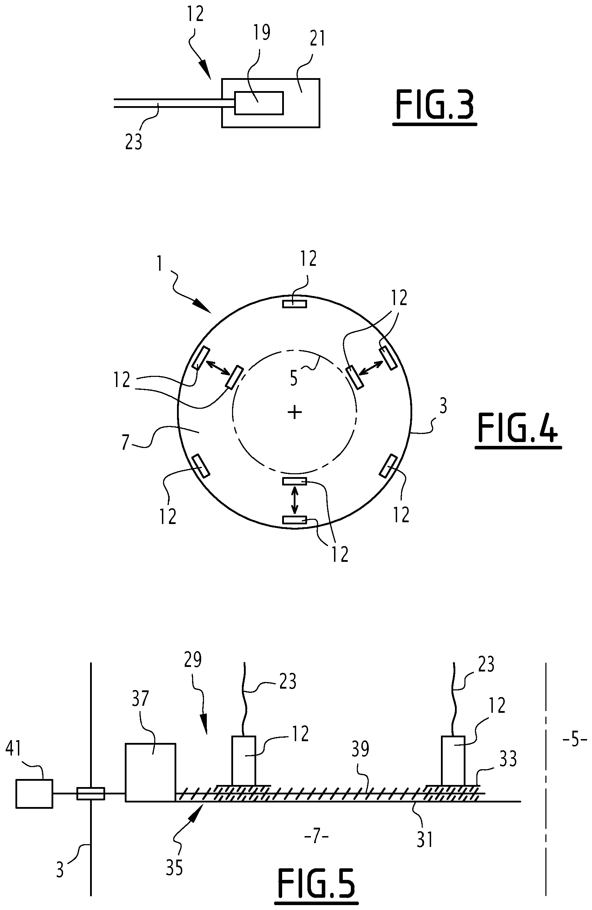

Un deuxième mode de réalisation de l'invention va maintenant être détaillé, en référence à la figure 4. Seuls les points par lesquels le deuxième mode de réalisation diffère du premier mode de réalisation seront détaillés ci-dessus.

Les éléments identiques ou assurant la même fonction seront désignés par les mêmes références que dans le premier mode de réalisation.

Ce deuxième mode de réalisation est particulièrement adapté au cas où le système de conduite et de protection du réacteur requiert une mesure sur plus de dix décades. Ceci est notamment le cas des réacteurs électrogènes rechargés avec un cœur neuf.

Dans le deuxième mode de réalisation, le dispositif de mesure 11 comprend au moins un détecteur neutronique 12 fixe, et au moins un détecteur neutronique 12 mobile.

Typiquement, le dispositif de mesure 11 comporte une pluralité de détecteurs fixes 12 et une pluralité de détecteurs mobiles 12.

Les détecteurs fixes et les détecteurs mobiles sont du type décrit plus haut en référence au premier mode de réalisation, et présentent typiquement tous les mêmes performances de détection.

Les détecteurs fixes 12 sont agencés comme décrit en référence au premier mode de réalisation.

Le ou chaque détecteur mobile 12 est mobile radialement par rapport au cœur 5 dans la lame d'eau primaire 7.

Dans ce cas, le dispositif de mesure 11 comprend, pour le ou chaque détecteur mobile 12, un mécanisme 29 de déplacement du détecteur mobile 12 (voir figure 5). Le mécanisme de déplacement 29 est configuré pour déplacer radialement le détecteur mobile 12 entre au moins une position intérieure relativement plus proche du cœur 5 et une position extérieure relativement plus éloignée du cœur 5.

Le ou chaque détecteur fixe 12 est placé à une première distance radiale du cœur 5.

Le ou chaque détecteur mobile 12, en position extérieure, est de préférence situé sensiblement à ladite première distance radiale du cœur 5.

L'amplitude du mouvement radial de chaque détecteur mobile 12 est par exemple comprise entre 200 et 400 mm.

Ainsi, le détecteur mobile dans sa position intérieure est situé à proximité immédiate du cœur, par exemple une distance radiale de l'ordre de 200 mm du cœur.

La distance est prise par rapport à l'assemblage de combustible nucléaire situé le plus proche du détecteur neutronique.

La position intérieure est choisie de telle sorte que, quand le réacteur nucléaire 1 est à l'arrêt, le flux neutronique au niveau du détecteur mobile 12 correspond à un comptage compris entre 1 et 100 coups par seconde, de préférence compris entre 5 et 50 coups par seconde, avec un temps de réponse acceptable, par exemple une constante de temps de filtrage de quelques secondes à dizaines de secondes. Par exemple, la position intérieure est choisie de telle sorte que le taux de comptage soit de 5 coups par seconde.

En principe, il n'y a aucune limitation sur la position intérieure du détecteur mobile, qui peut être extrêmement proche du cœur de manière à atteindre le comptage minimal même avec une activité résiduelle du cœur à l'arrêt très faible.

La position extérieure est choisie de telle sorte que, quand le réacteur nucléaire 1 fonctionne à pleine puissance, le flux neutronique au niveau du détecteur mobile 12 correspond à une mesure restant dans une gamme de mesure en mode courant du détecteur mobile 12.

Typiquement, la gamme de mesure nominale en mode courant d'un détecteur avec un organe de mesure de type CFUC07 est de 2mA en haut de gamme.

Les détecteurs fixes permettent typiquement de couvrir la gamme de puissance allant de 0,1% à 100% de la puissance nominale.

Les détecteurs mobiles sont utilisés à l'arrêt et couvrent typiquement la gamme de puissance allant jusqu'à 1% de la puissance nominale.

Ainsi, le positionnement des détecteurs mobiles par rapport aux détecteurs fixes permet qu'il y ait un recouvrement entre la gamme de puissance couverte par les détecteurs mobiles en position intérieure, et la gamme de puissance couverte par les détecteurs fixes et les détecteurs mobiles en position extérieure.

Quand les détecteurs mobiles sont en position extérieure, les mesures pour la protection du réacteur sont assurées par les détecteurs fixes. Les détecteurs mobiles sont utilisés pour détecter d'éventuelles distorsions azimutales du flux neutronique, permettant de détecter par exemple une chute intempestive d'un organe absorbeur de neutrons.

Le mécanisme de déplacement 29 est conçu pour assurer le déplacement du détecteur mobile 12 et la détection sûre de sa position radiale dans la lame d'eau primaire 7.

Selon une variante avantageuse, le mécanisme de déplacement est de type électromécanique (figure 5).

Ce mécanisme de déplacement 29 comprend une surface de support 31, un support glissant 33 sur lequel est fixé le détecteur mobile 12, et un dispositif 35 d'entrainement du support glissant 33 le long de la surface de support 31.

La surface de support 31 est par exemple un rail, s'étendant radialement, ou tout autre support adapté. Dans ce cas, le support glissant 33 coulisse dans le rail.

Le dispositif d'entrainement 35 est par exemple une vis motorisée, comme représenté sur la figure 5. Le dispositif comporte un moteur pas à pas 37, avec ou sans réducteur, et une vis 39 entrainée en rotation par le moteur 37. La vis 39 coopère avec un organe formant écrou, ménagé dans le support glissant 33. La vis 39 s'étend radialement. Elle est entrainée sélectivement en rotation par le moteur 37 soit dans le sens horaire soit dans le sens antihoraire. Le moteur 37 est piloté par un organe de contrôle 41 faisant partie du dispositif de mesure 11.

Ainsi, le détecteur 12 se déplace radialement vers l'axe central X ou au contraire en s'éloignant de l'axe X, en fonction du sens de rotation du moteur 37.

Selon une variante non représentée, le moteur 37 entraîne la vis 39 en rotation par le biais d'une chaîne cinématique non représentée, comportant des renvois d'angle, de telle sorte que le moteur 37 est positionné dans une zone de la cuve 3 protégée des neutrons directement issus du cœur. Par exemple, le moteur 37 est disposé à distance au-dessus du cœur 5.

Le mécanisme d'entraînement du type vis/écrou peut être par exemple directement dérivé de dispositions de commande de mécanismes de contrôle de grappe du type décrit dans la demande française publiée sous le numéro FR 3 039 695.

La position radiale du détecteur mobile 12 est mesurée soit à l'aide d'un codeur intégré dans le moteur 37, soit à l'aide de détecteurs de fin de course prévus pour détecter quand le détecteur mobile 12 arrive en position intérieure et en position extérieure.

La position du détecteur mobile 12 peut également être calculée en mesurant le nombre de pas de commande délivré aux phases du moteur 37 ou le nombre de pas de rotation du rotor du moteur 37, comme décrit pour des mécanismes de contrôle de grappes dans la demande de brevet déposée sous le numéro de dépôt FR1653366.

Selon une variante non représentée, le mécanisme de déplacement du détecteur mobile 12 est exclusivement mécanique. Ce mécanisme est agencé pour que le détecteur mobile 12 soit déplacé radialement vers sa position extérieure sous l'effet de la circulation de l'eau primaire dans la cuve 3, et soit rappelé par un moyen de rappel passif vers sa position intérieure. A forte puissance, le débit primaire important est mise à profit pour déplacer radialement le détecteur vers l'extérieur. A faible puissance le débit primaire réduit laisse le dispositif de rappel passif ramener le détecteur vers la position intérieure.

Par exemple, le mécanisme de déplacement comporte un rail radial le long duquel le détecteur mobile est libre de coulisser. Il comporte également des cloisons canalisant le flux d'eau primaire vers le détecteur mobile, agencé pour le flux d'eau primaire sollicite le détecteur mobile radialement vers l'extérieur de la cuve. Le moyen de rappel passif est par exemple un ressort. En variante, le moyen de rappel passif est la gravité, le rail étant par exemple incliné de manière à ce que le détecteur mobile 12 glisse vers sa position intérieure sous l'effet de son propre poids. La course du détecteur mobile est limitée par des butées mécaniques, en position intérieure et en position extérieure. Des détecteurs de fin de course permettent de détecter l'arrivée du détecteur mobile 12 à ses positions intérieure et extérieure.

Dans un exemple de réalisation, le dispositif de mesure 11 comprend deux détecteurs neutroniques 12 mobiles et trois détecteurs neutroniques 12 fixes, associés chacun à une chaîne de mesure 24.

Les deux détecteurs mobiles 12 permettent une mesure sûre au démarrage du réacteur.

Les trois détecteurs fixes 12 permettent une mesure sûre en puissance. Quand le réacteur nucléaire fonctionne en puissance, les deux détecteurs mobiles 12 sont placés dans leurs positions extérieures et restent opérationnels. Ils permettent d'améliorer la connaissance du flux neutronique en azimut.

Avantageusement, le dispositif de mesure 11 comporte en outre un détecteur mobile 12 de rechange, susceptible d'être connecté à l'une des cinq chaînes de mesure 24 en cas de défaillance d'un détecteur fixe ou d'un détecteur mobile.

L'organe de contrôle 41 du dispositif de mesure 11 est typiquement programmé pour mettre en œuvre les étapes suivantes :
- quand le réacteur nucléaire 1 est à l'arrêt ou fonctionne à une puissance inférieure à une première limite, mesurer le flux neutronique émis par le cœur 5 avec le ou chaque détecteur mobile 12 placé en position intérieure ;
- quand le réacteur nucléaire 1 fonctionne à une puissance supérieure à la première limite, mesurer le flux neutronique émis par le cœur 5 avec le ou chaque détecteur fixe 12.

La première limite vaut par exemple 1% de la puissance nominale de fonctionnement du réacteur.

Avantageusement, quand le réacteur nucléaire 1 passe d'une puissance inférieure à une seconde limite à une puissance supérieure à la seconde limite, le ou chaque détecteur mobile 12 est automatiquement déplacé à sa position extérieure.

Inversement, quand le réacteur nucléaire 1 passe d'une puissance supérieure à la première limite à une puissance inférieure à la première limite, le ou chaque détecteur mobile 12 est automatiquement ramené dans sa position intérieure.

La seconde limite vaut quelque pourcent de la puissance nominale du réacteur, par exemple 3%.

D'autres logiques sont possibles pour la programmation de l'organe de contrôle 41, dès lors qu'elles respectent le principe de recouvrement des chaines défini précédemment.

Selon une autre variante, les déplacements du ou de chaque détecteur mobile 12 sont commandés manuellement depuis la salle de pilotage du réacteur nucléaire.

Le procédé de pilotage du réacteur nucléaire 1 selon le deuxième mode de réalisation va maintenant être détaillé.

Le procédé comprend les étapes suivantes :
- quand le réacteur nucléaire 1 est à l'arrêt ou fonctionne à une puissance inférieure à une première limite, mesurer le flux neutronique émis par le cœur 5 avec le ou chaque détecteur mobile 12, placé en position intérieure ;
- quand le réacteur nucléaire 1 fonctionne avec une puissance supérieure à la première limite, mesurer le flux neutronique émis par le cœur 5 avec le ou chaque détecteur fixe 12.

Typiquement, le procédé comporte en outre l'étape suivante :
- déplacer le ou chaque détecteur mobile 12 à la position extérieure quand le réacteur nucléaire 1 passe d'une puissance inférieure à une seconde limite à une puissance supérieure à la seconde limite.

Les première et seconde limites sont celles décrites plus haut.

Le procédé de pilotage comporte de préférence l'étape ci-dessous :
- quand le réacteur nucléaire 1 passe d'une puissance supérieure à la première limite à une puissance inférieure à la première limite, ramener les détecteurs mobiles en position intérieure.

Cette étape est de préférence réalisée automatiquement, et déclenchée par chaque détecteur mobile 12 en fonction de sa propre mesure, de manière autonome.

L'organe de contrôle 41 du dispositif de mesure 1 lest programmé pour mettre en œuvre le procédé ci-dessus.

Selon une variante de réalisation applicable au second mode de réalisation, chaque détecteur mobile est déplaçable non pas entre deux positions, à savoir une position intérieure et une position extérieure, mais une pluralité de positions radiales, réparties entre la position intérieure et la position extérieure.

Ceci permet d'optimiser des recouvrements entre les détecteurs fixes et les détecteurs mobiles.

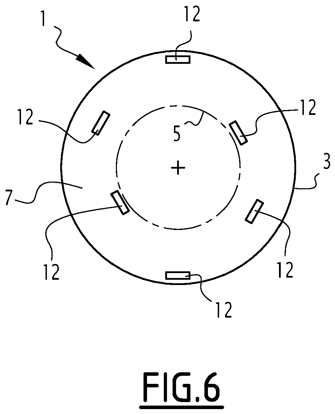

Un troisième mode de réalisation de l'invention va maintenant être détaillé, en référence à la figure 6. Seuls les points par lesquels le troisième mode de réalisation diffère du premier mode de réalisation seront détaillés ci-dessus.

Les éléments identiques ou assurant la même fonction seront désignés par les mêmes références que dans le premier mode de réalisation.

Dans le troisième mode de réalisation, tous les détecteurs neutroniques 12 sont fixes, et au moins deux des détecteurs neutroniques 12 sont disposés à des distances radiales du cœur 5 respectives différentes l'une de l'autre, adaptées pour des fourchettes de puissance différentes du réacteur nucléaire.

De préférence, les détecteurs neutroniques 12 sont répartis à plusieurs distances radiales du cœur 5 différentes les unes des autres, par exemple deux distances radiales, trois distances radiales ou plus de trois distance radiales différentes les unes des autres.

Dans l'exemple représenté sur la figure 6, deux détecteurs neutroniques 12 sont disposés à une première distance radiale du cœur. Ces détecteurs sont de préférence diamétralement opposés par rapport à l'axe central de la cuve.

Deux autres détecteurs neutroniques 12 sont disposés à une seconde distance radiale du cœur, plus petite que la première distance. Ces détecteurs sont de préférence diamétralement opposés par rapport à l'axe central de la cuve.

Encore deux autres détecteurs neutroniques 12 sont disposés à une troisième distance radiale du cœur, intermédiaire entre la première et la seconde distance. Ces détecteurs sont de préférence diamétralement opposés par rapport à l'axe central de la cuve.

Ce troisième mode de réalisation permet de progressivement basculer la mesure depuis les détecteurs les plus intérieurs vers les détecteurs les plus extérieurs, en bénéficiant du meilleur positionnement dans la gamme de mesure.

Selon une variante de réalisation, les détecteurs neutroniques 12 sont situés à des distances radiales du cœur 5 respectives toutes différentes les unes des autres.

Selon un quatrième mode de réalisation, le dispositif de mesure ne comporte que des détecteurs neutroniques mobiles. Par exemple, les trois détecteurs neutroniques fixes du deuxième mode de réalisation sont remplacés par des détecteurs mobiles. Ces détecteurs mobiles supplémentaires sont du même type que les détecteurs mobiles décrit en référence au deuxième mode de réalisation.

Le contrôleur 17 et/ou le dispositif de contrôle 41 comprend par exemple une unité de traitement d'informations formée d'un processeur et d'une mémoire associée au processeur. En variante, le contrôleur 17 et/ou le dispositif de contrôle 41 est réalisé sous la forme de composants logiques programmables tels que des FGPA (de l'anglais Field-Programmable Gâte Array), ou encore de circuits intégrés dédiés tels que des ASIC (de l'anglais Application-Specific Integrated Circuit).

## Revendications

1. Réacteur nucléaire (1) comprenant :
- une cuve (3) ayant un axe central (X) ;
- un cœur (5) disposé dans la cuve (3), le cœur (5) comprenant une pluralité d'assemblages de combustibles nucléaires, une lame d'eau primaire (7) séparant le cœur (5) de la cuve (3) radialement à partir de l'axe central (X) et entourant le cœur (5) ;
- un système (9) de conduite et de protection du réacteur nucléaire configuré pour assurer la conduite et la protection du réacteur dans une gamme de puissance prédéterminée, typiquement entre une puissance résiduelle à l'arrêt et une puissance nominale, ledit système de conduite et de protection (9) comprenant un dispositif (11) de mesure en continu du flux neutronique émis par le cœur (5) ;
**caractérisé par le fait que** le dispositif de mesure (11) comprend au moins un détecteur neutronique (12) mesurant en continu ledit flux neutronique, le ou les détecteur(s) neutronique(s) (12) étant disposé(s) dans la lame d'eau primaire (7) radialement entre le cœur (5) et la cuve (3), le ou les détecteur(s) neutronique(s) (12) étant placé(s) à une ou des position(s) radiale(s) choisie(s) pour obtenir, grâce à l'atténuation de la lame d'eau, un ou des taux de comptage adapté(s) pour le système de conduite de de protection du réacteur nucléaire (9) pour toute la gamme de puissance prédéterminée.

2. Réacteur selon la revendication 1, dans lequel le ou chaque détecteur nucléaire (12) est directement plongé dans l'eau primaire, sans interposition d'un doigt de gant.

3. Réacteur selon la revendication 1 ou 2, dans lequel au moins un des détecteurs neutroniques (12) est un détecteur fixe, disposé à une distance radiale fixe du cœur (5).

4. Réacteur selon la revendication 3, dans lequel ladite distance radiale est choisie de telle sorte que :
- quand le réacteur nucléaire (1) est à l'arrêt, le flux neutronique au niveau du détecteur fixe (12) correspond à un comptage compris entre 1 et 100 cp/s ;
- quand le réacteur nucléaire (1) fonctionne à pleine puissance, le flux neutronique au niveau du détecteur fixe (12) correspond à une mesure restant dans une gamme de mesure en mode courant du détecteur fixe (12).

5. Réacteur selon la revendication 3 ou 4, dans lequel tous les détecteurs neutroniques (12) sont fixes et sont disposés à ladite distance radiale du cœur (5).

6. Réacteur selon la revendication 3 ou 4, dans lequel tous les détecteurs neutroniques (12) sont fixes, au moins deux des détecteurs neutroniques (12) étant disposés à des distances radiales du cœur (5) respectives différentes l'une de l'autre, adaptées pour des fourchettes de puissance différentes du réacteur nucléaire.

7. Réacteur selon l'une quelconque des revendications 1-4, dans lequel au moins un des détecteurs neutroniques (12) est un détecteur mobile, mobile radialement par rapport au cœur (5) dans la lame d'eau primaire (7).

8. Réacteur selon la revendication 7, dans lequel le dispositif de mesure (11) comprend un mécanisme (29) de déplacement du détecteur mobile (12), configuré pour déplacer radialement le détecteur mobile (12) au moins entre une position intérieure relativement plus proche du cœur (5) et une position extérieure relativement plus éloignée du cœur (5).

9. Réacteur selon la revendication 8, dans lequel :
- la position intérieure est choisie de telle sorte que, quand le réacteur nucléaire (1) est à l'arrêt, le flux neutronique au niveau du détecteur mobile (12) corresponde à un comptage compris entre 1 et 100 cp/s ;
- la position extérieure est choisie de telle sorte que, quand le réacteur nucléaire (1) fonctionne à pleine puissance, le flux neutronique au niveau du détecteur mobile (12) corresponde à une mesure restant dans une gamme de mesure en mode courant du détecteur mobile (12).

10. Réacteur selon l'une quelconque des revendications 7 à 9 combiné à la revendication 3 ou 4, dans lequel le dispositif de mesure (11) comprend au moins un détecteur fixe (12) et au moins un détecteur mobile (12).

11. Procédé de pilotage d'un réacteur nucléaire (1) selon la revendication 10, le procédé comprenant les étapes suivantes :
- quand le réacteur nucléaire (1) est à l'arrêt ou fonctionne à une puissance inférieure à une première limite, mesurer le flux neutronique émis par le cœur (5) avec le ou chaque détecteur mobile (12), placé en position intérieure ;
- quand le réacteur nucléaire (1) fonctionne à une puissance supérieure à la première limite, mesurer le flux neutronique émis par le cœur (5) avec le ou chaque détecteur fixe (12).

12. Procédé de pilotage selon la revendication 11, dans lequel le ou chaque détecteur mobile (12) est déplacé à la position extérieure quand le réacteur nucléaire (1) passe d'une puissance inférieure à une seconde limite à une puissance supérieure à la seconde limite.

## Patentansprüche

1. Kernreaktor (1), welcher aufweist:
- einen Behälter (3), welcher eine zentrale Achse (X) hat,
- einen Kern (5), welcher im Behälter (3) angeordnet ist, wobei der Kern (5) eine Mehrzahl von Kernbrennelementanordnungen aufweist, wobei eine primäre Wasserschicht (7) den Kern (5) vom Behälter (3) radial ausgehend von der zentralen Achse (X) trennt und den Kern (5) umgibt, und
- ein System (9) zum Betrieb und zum Schutz des Kernreaktors, welches eingerichtet ist, um den Betrieb und den Schutz des Reaktors in einem vorbestimmten Leistungsbereich, typischerweise zwischen einer Restleistung beim Stillstand und einer Nennleistung, sicherzustellen, wobei das besagte System zum Betrieb und zum Schutz (9) eine Vorrichtung (11) zum kontinuierlichen Messen des Neutronenflusses, welcher vom Kern (5) emittiert wird, aufweist,
**gekennzeichnet durch** die Tatsache, dass die Vorrichtung zum Messen (11) zumindest einen Neutronendetektor (12) aufweist, welcher den besagten Neutronenfluss kontinuierlich misst, wobei der oder die Neutronendetektor/Neutronendetektoren (12) in der primären Wasserschicht (7) radial zwischen dem Kern (5) und dem Behälter (3) angeordnet ist/sind, wobei der oder die Neutronendetektor/Neutronendetektoren (12) in einer Radialposition oder in Radialpositionen angeordnet ist/sind, welche ausgewählt ist/sind, um mittels der Abschwächung der Wasserschicht eine Zählrate oder Zählraten zu erhalten, welche für das System zum Betrieb und zum Schutz des Kernreaktors (9) für den gesamten vorbestimmten Leistungsbereich angepasst ist/sind.

2. Reaktor gemäß Anspruch 1, wobei der oder jeder Kerndetektor (12) direkt in das primäre Wasser getaucht ist, ohne Zwischenanordnung eines Schutzrohrs.

3. Reaktor gemäß Anspruch 1 oder 2, wobei zumindest einer der Neutronendetektoren (12) ein fester Detektor ist, welcher in einem festen Radialabstand zum Kern (5) angeordnet ist.

4. Reaktor gemäß Anspruch 3, wobei der besagte Radialabstand ausgewählt ist, sodass:
- wenn der Kernreaktor (1) im Stillstand ist, der Neutronenfluss auf dem Niveau des festen Detektors (12) zu einer Zählung korrespondiert, welche zwischen 1 und 100 cp/s liegt,
- wenn der Kernreaktor (1) mit voller Leistung arbeitet, der Neutronenfluss auf dem Niveau des festen Detektors (12) zu einem Maß korrespondiert, welches in einem Messbereich im gegenwärtigen Modus des festen Detektors (12) bleibt.

5. Reaktor gemäß Anspruch 3 oder 4, wobei alle Neutronendetektoren (12) fest sind und im besagten Radialabstand zum Kern (5) angeordnet sind.

6. Reaktor gemäß Anspruch 3 oder 4, wobei alle Neutronendetektoren (12) fest sind, wobei zumindest zwei der Neutronendetektoren (12) jeweils in zueinander verschiedenen Radialabständen zum Kern (5) angeordnet sind, welche für unterschiedliche Leistungsspannen des Kernreaktors angepasst sind.

7. Reaktor gemäß irgendeinem der Ansprüche 1-4, wobei zumindest einer der Neutronendetektoren (12) ein bewegbarer Detektor ist, welcher in Bezug auf den Kern (5) in der primären Wasserschicht (7) radial bewegbar ist.

8. Reaktor gemäß Anspruch 7, wobei die Vorrichtung zum Messen (11) einen Mechanismus (29) zum Bewegen des bewegbaren Detektors (12) aufweist, welcher eingerichtet ist, um den bewegbaren Detektor (12) zumindest zwischen einer Innen-Position, welche relativ näher am Kern (5) ist, und einer Außen-Position, welche relativ weiter entfernt vom Kern (5) ist, radial zu bewegen.

9. Der Reaktor nach Anspruch 8, wobei:
- die Innen-Position so gewählt ist, dass, wenn der Kernreaktor (1) im Stillstand ist, der Neutronenfluss auf dem Niveau des bewegbaren Detektors (12) zu einer Zählung korrespondiert, welche zwischen 1 und 100 cp/s liegt,
- die Außen-Position so gewählt ist, dass, wenn der Kernreaktor (1) mit voller Leistung arbeitet, der Neutronenfluss auf dem Niveau des bewegbaren Detektors (12) zu einem Maß korrespondiert, welches in einem Messbereich im gegenwärtigen Modus des bewegbaren Detektors (12) bleibt.

10. Reaktor gemäß irgendeinem der Ansprüche 7 bis 9 kombiniert mit Anspruch 3 oder 4, wobei die Vorrichtung zum Messen (11) zumindest einen festen Detektor (12) und zumindest einen bewegbaren Detektor (12) aufweist.

11. Verfahren zum Steuern eines Kernreaktors (1) gemäß Anspruch 10, wobei das Verfahren die folgenden Schritte aufweist:
- wenn der Kernreaktor (1) im Stillstand ist oder mit einer Leistung arbeitet, welche kleiner als ein erster Grenzwert ist, Messen des Neutronenflusses, welcher vom Kern (5) emittiert wird, mit dem oder jedem in der Innen-Position angeordneten bewegbaren Detektor (12),
- wenn der Kernreaktor (1) mit einer Leistung arbeitet, welche größer als der erste Grenzwert ist, Messen des Neutronenflusses, welcher vom Kern (5) emittiert wird, mit dem oder jedem festen Detektor (12).

12. Verfahren zum Steuern gemäß Anspruch 11, wobei der oder jeder bewegbare Detektor (12) in die Außen-Position bewegt wird, wenn der Kernreaktor (1) von einer Leistung, welche kleiner als ein zweiter Grenzwert ist, zu einer Leistung übergeht, welche größer als der zweite Grenzwert ist.

## Claims

1. A nuclear reactor (1), comprising:
- a vessel (3) having a central axis (X);
- a core (5) positioned in the vessel (3), the core (5) comprising a plurality of nuclear fuel assemblies, a primary water layer (7) separating the core (5) from the vessel (3) radially from the central axis (X) and surrounding the core (5);
- a protection and control system (9) of the nuclear reactor configured to provide the protection and control of the reactor in a predetermined power range, typically a residual power upon stopping and a nominal power, said protection and control system (9) comprising a device (11) for continuous measurement of the neutron flux emitted by the core (5);
**characterized in that** the measuring device (11) comprises at least one neutron detector (12) continuously measuring said neutron flux, the neutron detector(s) (12) being positioned in the primary water layer (7) radially between the core (5) and the vessel (3), the neutron detector(s) (12) being placed in one or several radial position(s) chosen to obtain, owing to the attenuation of the water layer, one or several counting rates suitable for the instrumentation and control system of the nuclear reactor (9) for the entire predetermined power range.

2. The reactor according to claim 1, wherein the or each nuclear detector (12) is directly submerged in the primary water, without insertion of a gloved finger.

3. The reactor according to claim 1 or 2, wherein at least one of the neutron detectors (12) is a fixed detector, positioned at a fixed radial distance from the core (5).

4. The reactor according to claim 3, wherein said radial distance is chosen such that:
- when the nuclear reactor (1) is stopped, the neutron flux at the fixed detector (12) corresponds to a counting of between 1 and 100 cp/s;
- when the nuclear reactor (1) is operating at full power, the neutron flux at the fixed detector (12) corresponds to a measurement staying within a measuring range in the current mode of the fixed detector (12).

5. The reactor according to claim 3 or 4, wherein all of the neutron detectors (12) are fixed and are positioned at said radial distance from the core (5).

6. The reactor according to claim 3 or 4, wherein all of the neutron detectors (12) are fixed, at least two of the neutron detectors (12) being positioned at different respective radial distances from the core (5) from one another, suitable for different power ranges of the nuclear reactor.

7. The reactor according to any one of the claims 1 to 4, wherein at least one of the neutron detectors (12) is a moving detector, radially movable relative to the core (5) in the primary water layer (7).

8. The reactor according to claim 7, wherein the measuring device (11) comprises a movement mechanism (29) of the moving detector (12), configured to move the moving detector (12) radially at least between an inner position relatively closer to the core (5) and an outer position relatively further from the core (5).

9. The reactor according to claim 8, wherein:
- the inner position is chosen such that, when the nuclear reactor (1) is stopped, the neutron flux at the moving detector (12) corresponds to a counting of between 1 and 100 cp/s;
- the outer position is chosen such that, when the nuclear reactor (1) is operating at full power, the neutron flux at the moving detector (12) corresponds to a measurement staying within a measuring range in the current mode of the moving detector (12).

10. The reactor according to any one of claims 7 to 9 combined with claim 3 or 4, wherein the measuring device (11) comprises at least one fixed detector (12) and at least one moving detector (12).

11. A method for controlling the nuclear reactor (1) according to claim 10, the method comprising the following steps:
- when the nuclear reactor (1) is stopped or operating at a power below a first limit, measuring the neutron flux emitted by the core (5) with the or each moving detector (12), placed in the inner position;
- when the nuclear reactor (1) is operating at a power above the first limit, measuring the neutron flux emitted by the core (5) with the or each fixed detector (12).

12. The controlling method according to claim 11, wherein the or each moving detector (12) is moved to the outer position when the nuclear reactor (1) goes from a power below a second limit to a power above the second limit.
